# EUROPÄISCHE PATENTSCHRIFT

(11) **EP 2 175 156 B1**
(45) Veröffentlichungstag und Bekanntmachung des Hinweises auf die Patenterteilung: **13.04.2011**
(21) Anmeldenummer: 09012690.5
(22) Anmeldetag: 07.10.2009
(51) Int. Cl.: F16D 55/226

(54) **Scheibenbremse, insbesondere für ein Nutzfahrzeug**
Disc brake, in particular for a commercial vehicle
Frein à disque, en particulier pour un véhicule utilitaire

(30) Priorität: 08.10.2008 DE 102008050865
(43) Veröffentlichungstag der Anmeldung: 14.04.2010
(73) Patentinhaber: Knorr-Bremse Systeme für Nutzfahrzeuge GmbH, 80809 München (DE)
(72) Erfinder: Springer, Mario, 94535 Eging am See (DE); Wimmer, Josef, 94474 Vilshofen (DE)
(74) Vertreter: Mattusch, Gundula

(56) Entgegenhaltungen:
- EP-A- 1 160 479
- EP-B1- 1 230 491
- DE-U1-202007 005 313
- US-A1- 2004 134 722

## Beschreibung

Die Erfindung betrifft eine Scheibenbremse, insbesondere für ein Nutzfahrzeug nach dem Oberbegriff des Anspruchs 1.

Eine solche Scheibenbremse, die pneumatisch betätigbar ist, ist beispielsweise aus der EP 0 553 105 B1 sowie der EP 1 230 491 B1 bekannt.

Dabei stützt sich der an einem Ende als Exzenter ausgebildete Bremshebel am Bremssattel als Widerlager ab. Aufgrund des funktionsbedingt relativ großen Schwenkwinkels des Bremshebels stellen sich entsprechend hohe Reibungsverluste der Exzenter-Lagerung ein. Zu deren Reduzierung werden deshalb Wälzlagerhalbschalen eingesetzt, die die Exzenter-Lagerung umhüllen.

Allerdings ist die Realisierung solcher Wälzlagerungen nur mit einem erheblichen Fertigungsaufwand möglich, mit entsprechend hohen Herstellungskosten.

Daneben ist eine solche Wälzlagerung naturgemäß relativ störanfällig, was einer optimierten Standzeit entgegensteht.

In der genannten EP 1 230 491 B1 ist deshalb vorgeschlagen, zur Lagerung des Bremshebels am Bremssattel ausschließlich Gleitlager einzusetzen, die sich neben niedrigen Herstellungskosten durch eine besonders große Robustheit auszeichnen.

Allerdings liegen die Reibbeiwerte der verwendeten wartungsfreien Gleitlager um ein Vielfaches über dem Rollwiderstandswert der Wälzlager, was sich natürlich auf die Bereitstellung einer vom Bremszylinder aufzubringenden Bremskraft auswirkt. Zur Realisierung der Gleitlagerung des Bremshebels im Bremssattel sind kalottenförmige Lageraufnahmen vorgesehen, in denen Lagerelemente in Form von Kugeln einliegen, die sich andererseits am Bremshebel abstützen.

Zur Bearbeitung der Lageraufnahme ist es erforderlich, den Bremssattel zweiteilig auszubilden und die beiden Hälften des Bremssattels nach der Bearbeitung zu verschrauben.

Diese Verschraubung stellt jedoch eine potentielle Schwachstelle dar, da die Schrauben, die auf den Bremssattel einwirkenden Kräfte aufnehmen müssen.

Das Einbringen von Durchgangs- und Gewindebohrungen, ebenso wie die Bereitstellung der Schrauben selbst, stellen einen die Herstellungskosten ungünstig beeinflussenden Faktor dar, der insbesondere unter dem Aspekt, dass es sich bei Scheibenbremsen um Serienprodukte handelt, die in großen Stückzahlen zum Einsatz kommen, von besonderer Bedeutung ist.

Bei einer einteiligen Ausbildung des Bremssattels ist die Bearbeitung der kalottenförmigen Lageraufnahmen aufgrund der engen Platzverhältnisse werkzeugtechnisch äußerst problematisch.

So muss entweder ein Fräswerkzeug mit einem extrem langen Schaft eingesetzt werden, das von außerhalb des Bremssattels eingeführt wird, was die Genauigkeit der Bearbeitung begrenzt, oder bei Platzierung des Bearbeitungswerkzeuges innerhalb des Bremssattels mit einem Winkelgetriebe, ist ebenfalls nur eine relativ ungenaue Bearbeitung möglich, und überdies kein hohes Drehmoment übertragbar, so dass diese Art der Bearbeitung eine rationelle Fertigung nicht zulässt.

Alles in allem ist die bekannte Konfiguration des Bremssattels nicht für eine optimierte Fertigung geeignet.

Der Erfindung liegt die Aufgabe zugrunde, eine Scheibenbremse der gattungsgemäßen Art so weiterzuentwickeln, dass ihre Herstellung, insbesondere die Bearbeitung des Bremssattels, einfacher und damit kostengünstiger wird.

Diese Aufgabe wird durch eine Scheibenbremse mit den Merkmalen des Anspruchs 1 gelöst.

Dadurch, dass die Lageraufnahme nicht mehr einstückig mit dem Bremssattel ausgebildet ist, sondern als separat gefertigtes Stützelement, das in eine Öffnung des Bremssattels eingesetzt ist, ergeben sich eine ganze Reihe von Vorteilen, die sich nicht auf die erkennbar einfachere und damit kostengünstigere Herstellung bzw. Bearbeitung beschränken.

Vielmehr besteht nun auch die Möglichkeit, ohne besonderen fertigungstechnischen Aufwand, die Kalotte der Lageraufnahme den gestellten Anforderungen bezüglich Oberflächengüte und/oder -härte herzustellen, so dass auch rein funktional eine Optimierung erreicht wird.

Durch die Erfindung kann insoweit auf eine Innenbearbeitung des Bremssattels verzichtet werden. Um den Bremssattel für den Einsatz des Stützelementes herzurichten, ist, wenn erforderlich, eine Bearbeitung von außen her möglich, wobei sich als Werkzeugauflager eine Außenfläche am Bremssattel anbietet, an der ein Potentiometer als Bestandteil einer Verschleißerkennung anbringbar ist.

Die Öffnung zum Einsetzen der Lageraufnahme, die beispielsweise im Sinne eines Stopfens ausgebildet sein kann, kann als Durchgangsbohrung beim Gießen des in diesem Fall als einstückiges Gussteil ausgebildeten Bremssattels durch entsprechende Formung hergestellt sein. Eine Feinbearbeitung der Bohrung kann von außen erfolgen.

Hierzu zählt beispielsweise auch das Einbringen eines Innengewindes, in das ein Lagerbolzen einschraubbar ist, der Bestandteil der Lageraufnahme ist und der von außen in die dann vorhandene Gewindebohrung eingeschraubt wird, während innenseitig ein die Kalotte aufweisender Lagerkopf am Lagerbolzen angeschlossen wird.

Dieser Lagerkopf kann ein Kaltfliespress- oder Schmiedeteil sein, während der Lagerbolzen als Zentrier- und Distanzstück für den Lagerkopf fungiert. Nach einem weiteren Gedanken der Erfindung ist vorgesehen, dass das Stützelement von innen her in die zuvor von der Außenseite her gespindelte und zirkular bearbeitete Öffnung eingepresst wird. In diesem Fall wird das Stützelement reibschlüssig gehalten.

Bevorzugt ist an der Innenseite des Bremssattels konzentrisch zur Öffnung ein Auge angeformt, an dem ein Ansatz des eingepressten Stützelementes anliegt.

Eine bevorzugte Ausführungsvariante der Erfindung sieht vor, dass zwei Stützelemente integraler Bestandteil eines Einsatzteiles sind, das eine zentrale Hülse aufweist, an die sich rechts- und linksseitig jeweils ein Stützelement anschließt, wobei die zentrale Hülse in eine Zentralbohrung des Bremssattels eingesetzt ist, zur Aufnahme eines Nachstellers.

Vor allem zur Verdrehsicherung des Einsatzteiles ist an die beiden Stützelemente jeweils ein Ansatz angeformt, der in eine dafür vorgesehene Öffnung im Bremssattel gesteckt ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teilausschnitt auf eine erfindungsgemäße Scheibenbremse in einer geschnittenen Draufsicht
- Figur 2: eine Ausführungsbeispiel der Erfindung in einer Vorderansicht auf den geschnittenen Bremssattel
- Figur 3: das Ausführungsbeispiel nach Figur 2 in einem Teilausschnitt in einer perspektivischen Draufsicht
- Figur 4: ein weiteres Ausführungsbeispiel der Erfindung in einem Teilaus- schnitt des Bremssattels in einer perspektivischen, geschnittenen Draufsicht als Teilausschnitt des Bremssattels, dargestellt in einer perspektivischen Schnittansicht
- Figur 5: eine Einzelheit des Ausführungsbeispiels nach Figur 4 in schau- bildlicher Darstellung
- Figur 6: ein weiteres Ausführungsbeispiel der Erfindung in einem Teilaus- schnitt des Bremssattels in einer perspektivischen, geschnittenen Draufsicht als Teilausschnitt des Bremssattels, dargestellt in einer perspektivischen Schnittansicht
- Figuren 7 und 8: eine Einzelheit des Ausführungsbeispiels nach Figur 6, jeweils in einer unterschiedlichen schaubildlichen Darstellung.

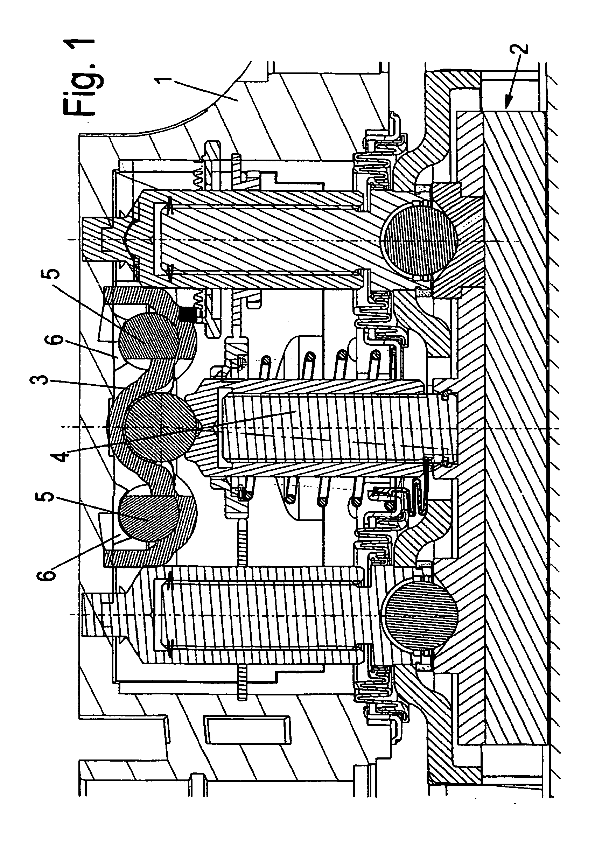

In der Figur 1 ist in einem Teilausschnitt eine pneumatisch betätigbare Scheibenbremse dargestellt, mit einem an einem ortsfesten Bremsträger gehaltenen Bremssattel 1, einem zuspannseitigen Bremsbelag 2 und einem nicht gezeigten reaktionsseitigen Bremsbelag, die gegen eine Bremsscheibe pressbar sind.

Zum Zuspannen ist eine Zuspanneinrichtung in Form eines Drehhebels 3 und eines Bremsstempels 4 vorgesehen, über den der Bremsbelag 2 in axialer Richtung, bezogen auf die Drehachse der Bremsscheibe, bewegbar ist.

Der Bremshebel 3 ist um eine Exzenterdrehachse gegen den Bremsstempel 4 verschwenkbar, die durch zwei kugelförmige Lagerelemente 5 gebildet wird, die einerseits in Kalotten des Bremshebels 3 und andererseits in Lageraufnahmen 6 einliegen, die stirnseitig als Kalotten 7 ausgebildet sind.

Diese Lageraufnahmen 6 sind an der Innenseite des Bremssattels 1 angeordnet, der in diesem Bereich als Sattelkopf bezeichnet wird.

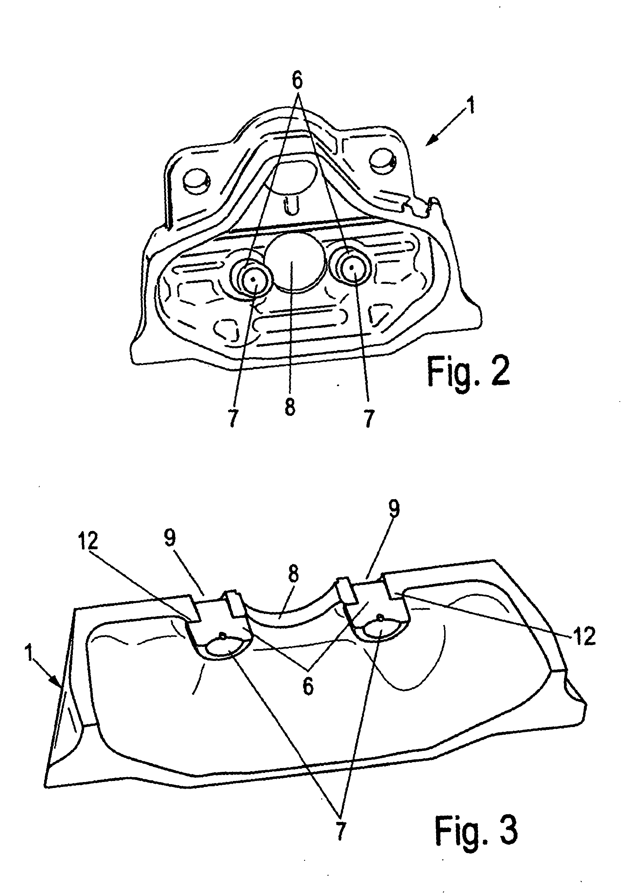

Erfindungsgemäß sind die Lageraufnahmen 6 jeweils als separates Stützelement in eine Öffnung 9 (Figur 3) des Bremssattels 1 eingesetzt und werden dort vorzugsweise form- oder reibschlüssig gehalten.

Bei dem in den Figuren 2 und 3 gezeigten Beispiel ist die Öffnung 9 als glattschaftige Durchgangsbohrung ausgebildet, die an der Innenseite des Bremssattels 1 durch ein angeformtes Auge 12 geführt ist, das eine Anlagefläche für die Lageraufnahme 6 bildet.

Diese weist an dem der Kalotte 7 abgewandten Endbereich einen Schaft auf, der in die Öffnung 9 eingepresst ist, so dass hier das Lagerelement 6 reibschlüssig einliegt.

Im Übrigen wird das Lagerelement 6 auch durch den Gegendruck des Bremshebels 3 in der Öffnung 9 gehalten, der insoweit spielfrei an dem zugeordneten Lagerelement 5 anliegt, wobei die Lageraufnahme 6 praktisch ein Widerlager für den Bremshebel 3 bildet.

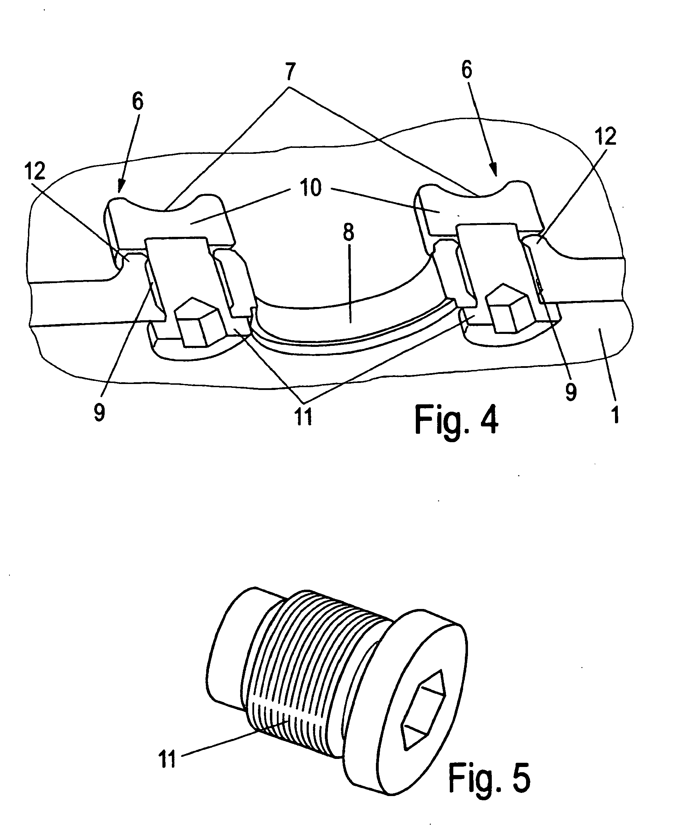

In der Figur 4 ist eine Variante der Erfindung gezeigt, bei der das Lagerelement 6 zweiteilig ausgebildet ist und zwar bestehend aus einem Lagerbolzen 11 und einem darauf gesteckten Lagerkopf 10, in den die Kalotte 7 eingelassen ist.

Der Lagerbolzen 11, der als Einzelheit in der Figur 5 gezeigt ist, weist einen Gewindeschaft auf, der mit einem Innengewinde der Öffnung 9 korrespondiert, wobei der Lagerbolzen 11 von außen her in die Gewindebohrung eingeschraubt ist, bis er ein Stück weit das Auge 12 überragt. Dieses herausragende Stück dient der Aufnahme des Lagerkopfes 10.

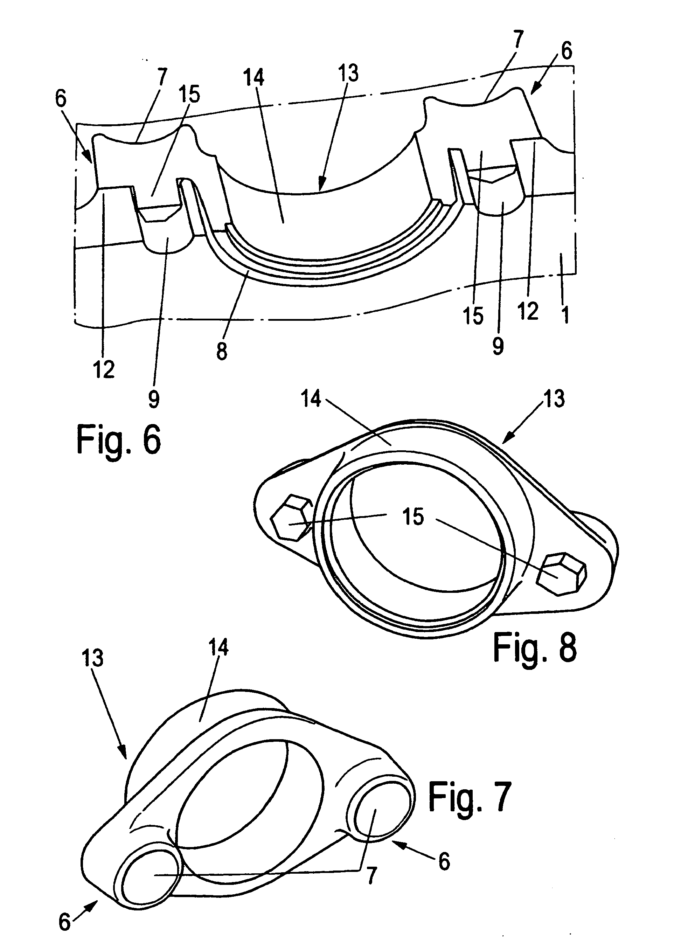

Eine weitere Ausführung der Erfindung ist in den Figuren 6 bis 8 erkennbar. Hier sind die beiden, rechts und links einer Zentralbohrung 8 im Bremssattel 1 angeordneten Lageraufnahmen 6 Bestandteil eines Einsatzteiles 13, das eine konzentrische Hülse 14 aufweist, die in die Zentralbohrung 8 eingesteckt ist, und zwar von der Innenseite des Bremssattels 1 her.

Dabei weist jede Lageraufnahme 6 auf ihrer der Kalotte 7 abgewandten Seite einen Ansatz 15 auf, der, wie besonders deutlich in der Figur 8 zu erkennen ist, als Mehrkant gestaltet und in die entsprechende Öffnung 9 des Bremssattels 1 eingepresst ist.

Die Hülse 14 bildet mit ihrer Innenwandung eine Führung für eine durch die Zentralbohrung 8 zu führende Nachstelleinrichtung, so dass das Einsatzteil 13 sowohl diese Funktion wie auch die der Lageraufnahmen übernimmt. Vorzugsweise ist das Einsatzteil 13 als Kaltfliespressteil ausgebildet.

### Bezugszeichenliste

- 1: Bremssattel
- 2: Bremsbelag
- 3: Bremshebel
- 4: Bremsstempel
- 5: Lagerelement
- 6: Lageraufnahme
- 7: Kalotte
- 8: Zentralbohrung
- 9: Öffnung
- 10: Lagerkopf
- 11: Lagerbolzen
- 12: Auge
- 13: Einsatzteil
- 14: Hülse
- 15: Ansatz

## Patentansprüche

1. Scheibenbremse, mit einem eine Bremsscheibe übergreifenden Bremssattel (1), beidseitig an die Bremsscheibe anpressbaren Bremsbelägen (2), von denen ein zuspannseitiger, mittels eines um eine Exzenterachse schwenkbaren Bremshebels (3) einer Zuspanneinrichtung betätigbar ist, wobei der Bremssattel (1) zumindest eine mit einer Kalotte (7) versehene Lageraufnahme (6) aufweist, in der ein kugelförmiges Lagerelement (5) des Bremshebels (3) einliegt, **dadurch gekennzeichnet, dass** die Lageraufnahme (6) als separates Stützelement in eine Öffnung des Bremssattels (1) eingesetzt ist.

2. Scheibenbremse nach Anspruch 1, **dadurch gekennzeichnet, dass** die Lageraufnahme (6) form- oder reibschlüssig in der Öffnung (9) gehalten ist.

3. Scheibenbremse nach Anspruch 1 oder 2, **dadurch gekennzeichnet, dass** sich die Lageraufnahme (6) an einem an der Innenwandung des Bremssattels (1) angeordneten angeformten Auge (12) abstützt.

4. Scheibenbremse nach einem der vorhergehenden Ansprüche, **dadurch gekennzeichnet, dass** die Öffnung (9) als Durchgangsbohrung ausgebildet ist und von der Außenseite des Bremssattels (1) her bearbeitet ist.

5. Scheibenbremse nach einem der vorhergehenden Ansprüche, **dadurch gekennzeichnet, dass** die Lageraufnahme (6) in die Öffnung (9) eingeschraubt ist.

6. Scheibenbremse nach einem der vorhergehenden Ansprüche, **dadurch gekennzeichnet, dass** die Lageraufnahme (6) einen mit einem Außengewinde versehenen Lagerbolzen (11) aufweist, der in die mit einem Innengewinde versehene Öffnung (9) eingeschraubt ist und an den endseitig ein Lagerkopf (10) befestigt ist, der die Kalotte (7) aufweist.

7. Scheibenbremse nach einem der vorhergehenden Ansprüche, **dadurch gekennzeichnet, dass** die Lageraufnahme (6) als Kaltfliespress- oder Schmiedeteil ausgebildet ist.

8. Scheibenbremse nach einem der vorhergehenden Ansprüche, **dadurch gekennzeichnet, dass** in eine Zentralbohrung (8) des Bremssattels (1) ein Einsatzteil (13) eingesteckt ist, an das zwei Lageraufnahmen (6) angeformt sind, die rechts- und linksseitig einer in die Zentralbohrung (8) eingesteckten Hülse (14) angeordnet sind.

9. Scheibenbremse nach Anspruch 8, **dadurch gekennzeichnet, dass** jede Lageraufnahme (6) des Einsatzteiles (13) einen Ansatz (15) aufweist, der reibschlüssig in der zugeordneten Öffnung (9) einliegt.

10. Scheibenbremse nach Anspruch 9, **dadurch gekennzeichnet, dass** der Ansatz (15) im Querschnitt als Mehrkant ausgebildet ist.

## Claims

1. Disc brake, with a brake caliper (1) which spans across a brake disc and with brake linings (2) that can be pressed against either side of the brake disc, of which the one on the application side can be actuated by means of a brake lever (3) of a brake application device which can pivot about an eccentric axis, such that the brake caliper (1) comprises at least one bearing holder (6) provided with a cup (7) in which a ball-shaped bearing element (5) of the brake lever (3) is held, **characterised in that** the bearing holder (6) is inserted as a separate supporting element in an opening of the brake caliper (1).

2. Disc brake according to Claim 1, **characterised in that** the bearing holder (6) is held in the opening (9) by positive interlock or by friction force.

3. Disc brake according to Claims 1 or 2, **characterised in that** the bearing holder (6) is supported on a lug (12) formed on the inside wall of the brake caliper (1).

4. Disc brake according to any of the preceding claims, **characterised in that** the opening (9) is in the form of a through-going bore machined from the outside of the brake caliper (1).

5. Disc brake according to any of the preceding claims, **characterised in that** the bearing holder (6) is screwed into the opening (9).

6. Disc brake according to any of the preceding claims, **characterised in that** the bearing holder (6) comprises a bearing bolt (11) provided with an external thread, which is screwed into the opening (9) provided with an internal thread, and at the end of the bolt is attached a bearing head (10) which comprises the cup (7).

7. Disc brake according to any of the preceding claims, **characterised in that** the bearing holder (6) is in the form of a cold-impact-formed or a forged component.

8. Disc brake according to any of the preceding claims, **characterised in that** into a central bore (8) of the brake caliper (1) is plugged an insert (13) on which two bearing holders (6) are formed, which are arranged to the left and to the right of a sleeve (14) inserted in the said central bore (8).

9. Disc brake according to Claim 8, **characterised in that** each bearing holder (6) of the insert (13) has an extension (15), which is held in the associated opening (9) by friction.

10. Disc brake according to Claim 9, **characterised in that** the said extension (15) has a cross-section.

## Revendications

1. Frein à disque, comprenant un étrier (1) de frein, empiétant sur un disque de frein, des garnitures (2) de frein pouvant être pressées des deux côtés sur le disque de frein, dont l'une peut être actionnée côté serrage au moyen d'un levier (3) de frein pouvant pivoter autour d'un axe à excentrique d'un dispositif de serrage, l'étrier (1) de frein ayant au moins un logement (6) de palier, qui est pourvu d'une calotte (7) et dans lequel entre un élément (5) de palier de forme sphérique du levier (3) de frein, **caractérisé en ce que** le logement (6) de palier est inséré sous la forme d'un élément d'appui distinct dans une ouverture de l'étrier (1) de frein.

2. Frein à disque suivant la revendication 1, **caractérisé en ce que** le logement (6) de palier est maintenu à complémentarité de forme ou à complémentarité de frottement dans l'ouverture (9).

3. Frein à disque suivant la revendication 1 ou 2, **caractérisé en ce que** le logement (6) de palier s'appuie sur un oeillet (12) formé sur la paroi intérieure de l'étrier (1) de frein.

4. Frein à disque suivant l'une des revendications précédentes, **caractérisé en ce que** l'ouverture (9) est constituée sous la forme d'un trou traversant et est usinée à partir du côté extérieur de l'étrier (1) de frein.

5. Frein à disque suivant l'une des revendications précédentes, **caractérisé en ce que** le logement (6) de palier est vissé dans l'ouverture (9).

6. Frein à disque suivant l'une des revendications précédentes, **caractérisé en ce que** le logement (6) de palier a un boulon (11) de palier pourvu d'un filetage extérieur, qui est vissé dans l'ouverture (9) pourvue d'un taraudage et sur lequel est fixé du côté de l'extrémité une tête (10) de palier qui comporte la calotte (7).

7. Frein à disque suivant l'une des revendications précédentes, **caractérisé en ce que** le logement (6) de palier est constitué sous la forme d'une pièce filée à la presse à froid ou forgée.

8. Frein à disque suivant l'une des revendications précédentes, **caractérisé en ce que** dans un trou (8) central de l'étrier (1) de frein est enfilé un insert (13), sur lequel sont formés deux logements (6) de palier, qui sont disposés du côté droit et du côté gauche d'un manchon (14) enfilé dans le trou (8) central.

9. Frein à disque suivant la revendication 8, **caractérisé en ce que** chaque logement (6) de palier de l'insert (13) comporte un téton (15), qui est inséré par frottement dans l'ouverture (9) associée.

10. Frein à disque suivant la revendication 9, **caractérisé en ce que** le téton (15) a une section transversale polygonale.
